# EUROPÄISCHE PATENTSCHRIFT

(11) **EP 2 010 871 B1**
(45) Veröffentlichungstag und Bekanntmachung des Hinweises auf die Patenterteilung: **13.04.2016**
(21) Anmeldenummer: 07728066.7
(22) Anmeldetag: 13.04.2007
(51) Int. Cl.: G01F 23/284, G01F 25/00

(54) **VERFAHREN ZUR ERMITTLUNG UND ÜBERWACHUNG DES FÜLLSTANDS EINES MEDIUMS IN EINEM BEHÄLTER**
METHOD FOR DETERMINING AND MONITORING THE LEVEL OF A MEDIUM IN A CONTAINER
PROCÉDÉ POUR DÉTERMINER ET SURVEILLER LE NIVEAU DE REMPLISSAGE D'UN FLUIDE DANS UN RÉCIPIENT

(30) Priorität: 21.04.2006 DE 102006019191
(43) Veröffentlichungstag der Anmeldung: 07.01.2009
(73) Patentinhaber: Endress+Hauser GmbH+Co. KG, 79689 Maulburg (DE)
(72) Erfinder: SCHROTH, Herbert, 79650 Schopfheim (DE); REIMELT, Ralf, 79100 Freiburg (DE)
(74) Vertreter: Andres, Angelika Maria
(86) Internationale Anmeldenummer: PCT/EP2007/053599
(87) Internationale Veröffentlichungsnummer: WO 2007/122116

(56) Entgegenhaltungen:
- EP-A- 1 020 735
- EP-A2- 0 534 654
- GB-A- 2 164 151
- US-B2- 6 867 729

## Beschreibung

Die Erfindung bezieht sich auf ein Verfahren zur Ermittlung und Überwachung des Füllstands eines Mediums in einem Behälter mit einem Füllstandsmessgerät, bei dem nach der Methode der Zeitbereichsreflektometrie hochfrequenter Messsignale über zumindest eine Messsonde in Richtung des Mediums geführt werden und an zumindest einer Grenzschicht des Mediums als Nutzechosignale oder an Störstellen als Störechosignale reflektiert und empfangen werden.

Entsprechende Verfahren zur Ermittlung und Überwachung des Füllstandes in einem Behälter werden häufig in Messgeräten der Automations- und Prozesssteuerungstechnik eingesetzt. Von der Anmelderin werden beispielsweise Messgeräte unter dem Namen Levelflex produziert und vertrieben, welche nach einer Laufzeit-Messmethode arbeiten und dazu dienen, den Füllstand eines Mediums in einem Behälter zu bestimmen und/oder zu überwachen. Nach der Methode der geführten Mikrowelle bzw. der Zeitbereichsreflektometrie oder der TDR-Messmethode (Time Domain Reflectometry) wird ein hochfrequentes Messsignals, wie z.B. ein Hochfrequenzimpuls, entlang eines Wellenleiters ausgesendet, welches bei einem Sprung in der Dielektrizitätskonstanten des den Wellenleiter umgebenden Mediums zumindest teilweise als Echosignal zurückreflektiert wird. Anhand der Zeitdauer bzw. Laufzeit zwischen dem Aussenden der Hochfrequenzimpulse und dem Empfang der reflektierten Echosignale lässt sich in Bezugnahme der Ausbreitungsgeschwindigkeit des hochfrequenten Messsignals der Abstand des Messgerätes zu der Mediumsoberfläche ermitteln. Unter Berücksichtigung der Geometrie des Behälterinnern wird dann der Füllstand des Mediums als relative oder absolute Größe ermittelt. Der Vorteil der Zeitbereichsreflektometrie ist die weitgehende Unabhängigkeit von Produkteigenschaften wie Dichte, Dielektrizitätskonstante oder Leitfähigkeit, von Prozessbedingungen wie unruhigen Oberflächen oder Schaumbildung, sowie von Eigenschaften des Behälters, wie Form, Größe oder Einbauten.

Die Laufzeit-Messmethode lässt sich im wesentlichen in zwei Ermittlungsverfahren einteilen: Das erste Ermittlungsverfahren beruht auf einer Laufzeitmessung, die ein Impulsfolgen moduliertes Signal für die zurückgelegte Wegstrecke erfordert; ein zweites weit verbreitetes Ermittlungsverfahren beruht auf der Bestimmung der Frequenzdifferenz des aktuell ausgesendeten, kontinuierlich frequenzmodulierten Hochfrequenzsignals zum empfangenen, reflektierten Hochfrequenzsignal (FMCW - FrequencyModulated Continuous Wave). Im Allgemeinen wird in den folgenden Ausführungen keine Beschränkung auf ein bestimmtes Ermittlungsverfahren vorgenommen.

Nach heutigem Stand der Technik gibt es verschiedene Ansätze, die exakte Position des Füllstand-Nutzechosignals in der ermittelten Echokurve bzw. der digitalisierten Hüllkurve zu bestimmen. Von der genauen Bestimmung der Messposition des Füllstands in der Echokurve hängt jedoch ab, welche Messgenauigkeit mit diesem Echomessprinzip unter den gegebenen Messbedingungen erreicht werden kann. Ein Ansatz, den Füllstand zu bestimmen, ist hierbei, das Nutzechosignal in der Echokurve mit der größten Amplitude zu ermitteln. Unter realen Messbedingungen ist es jedoch oft nicht möglich, den exakten Füllstand im Behälter zu bestimmen, da beispielsweise der Bezugspunkt nicht exakt bestimmt werden kann und/oder die Laufzeit des Messsignals entlang des Wellenleiters variiert.

In einem Füllstandmessgerät wird meistens eine Referenzreflexion zur Ermittlung des Bezugspunkts der Laufzeitmessung herangezogen. Als Reflexionsstellen eignen sich lokale Änderungen am Wellenleiter oder in der Nähe des Wellenleiters, wie z. B. Änderungen des Querschnitts metallischer oder dielektrischer Strukturen in Form von Verdickung, Verjüngung oder sonstige Unregelmäßigkeit, Änderungen der dielektrischen Eigenschaften an Stellen, an denen das elektrische Feld von Null verschieden ist, Änderungen der magnetischen Eigenschaften an Stellen, an denen das magnetische Feld von Null verschieden ist, und/oder Änderungen der Leitfähigkeit an Stellen, an denen die Stromdichte von Null verschieden ist.

Bei einer TDR-Messmethode mit einem Wellenleiter wird als Bezugspunkt entweder der Sendepuls selbst verwendet, wie in der US 3,424,002 und in der US 3,995,212 dargestellt wurde, oder es wird eine Störreflexion innerhalb des

messinaktiven Teils des Sensors, wie in der EP 0 780 664 A2 gezeigt, verwendet. Eine weitere Möglichkeit, den Bezugspunktes der TDR-Messmethode mit einem Wellenleiter festzulegen, ist die Störstelle beim Übergang vom messinaktiven Bereich zum messaktiven Bereich der Messsonde bzw. des Wellenleiters , den so genannten "Fiducial", als Bezugspunkt zu verwenden, wie in der US 3,474,337 und in der DE 44 04 745 A1 beschrieben. Außerdem wird in der US 5,345,471 eine weitere Methode gezeigt, indem eine definierte Störstelle am Übergang vom messinaktiven Bereich zum messaktiven Bereich des Wellenleiters durch ein zwischen die Messsonde und den Flansch bzw. den Außenleiter geschaltetes Widerstandsbauteil diesen Bezugspunkt festsetzt.

Eine weitere Verwendung von Störstellen an Wellenleitern bzw. Messsonden ist die Kalibrierung der Laufzeit der Messsignale entlang des Wellenleiters eines Füllstandmessgeräts. Diese Störstellen werden meist durch eine Änderung der Messsondengeometrie bewirkt. Zur Kalibrierung einer Laufzeitmessung mit einem TDR-Füllstandsmessgerät können eine Anzahl von Störstellen am Wellenleiter verwendet werden. Diese Störstellen sind beispielsweise im messaktiven Bereich des Sensors angebracht, wie insbesondere in der US 3,398,578, EP 0 534 654 B1 und der US 3,474,337 mit Abstandshaltern an einer koaxialen Messsonde als Referenzmarker gezeigt. Als weitere Möglichkeit zur Kalibrierung einer Laufzeitmessung mit einem TDR-Füllstandsmessgerät können zwei Störstellen dienen, wobei eine am Übergang des messinaktiven Bereichs zum aktiven Bereich angeordnet ist und eine im messaktiven Bereich, wie in der US 3,474,337 und der US 5,249,463 angeführt, oder wobei eine im messinaktiven Bereich des Sensors angeordnet ist und eine im messaktiven Bereich, wie in der US 6,867,729 B2 gezeigt wurde.

Eine andere Art und Weise als durch Geometrieänderungen des Wellenleiters eine Störstelle zur Kalibrierung der Laufzeit zu erzeugen, wird in der US 5,376,888 aufgeführt, wobei ansteuerbare PIN-Dioden als Referenzmarker zwischen den Leitern einer Mehrleitersonde verwendet werden.

Zur effektiven Diagnose und Kalibrierung eines TDR-Füllstandmessgeräts sind sowohl das Füllstandsecho, der Bezugspunkt als auch die Reflexionen der Störstellen genau und zuverlässig zu bestimmen. In der US 6,867,729 B2 wird hierzu über eine umschaltbare Verstärkung abwechselnd ein Störstellenecho im aktiven Bereich des Sensors und ein Füllstandsecho ermittelt. Hierbei wird versucht, bei wechselnder Amplitude des Füllstandechos, die beispielsweise durch einen wechselnden DK-Wert des Mediums verursacht wird, über einen Fensterdiskriminator bzw. "constant-fraction-discriminator" (CFD) trotzdem eine einigermaßen genaue Bestimmung der Position des Füllstandsechos durchzuführen.

Nachteilig bei allen diesen Arten der Bestimmung des Füllstandes ist, dass der Bezugspunkt von den Prozessbedingungen und den Messbedingungen abhängig ist, wodurch der Füllstand des Mediums in einem Behälter aufgrund des undefinierten Bezugspunktes bzw. Nullpunktes nicht genau bestimmt werden kann.

Die Aufgabe der Erfindung ist es, ein Verfahren aufzuzeigen, mit dem eine exakte Bestimmung des Füllstands und folglich eine erhöhte Messsicherheit und Zuverlässigkeit der Messung mit dem Füllstandsmessgerät erreicht wird.

Diese Aufgabe wird nach der Erfindung gelöst durch ein Verfahren zur Ermittlung und Überwachung des Füllstands eines Mediums in einem Behälter mit einem Füllstandsmessgerät, bei dem nach der Methode der Zeitbereichsreflektometrie hochfrequenter Messsignale über zumindest eine Messsonde in Richtung des Mediums geführt werden und an zumindest einer Grenzschicht des Mediums als Nutzechosignale oder an Störstellen als Störechosignale reflektiert und empfangen werden, welches Verfahren folgende Schritte umfasst, wobei ein Referenzechosignal in einem messinaktiven Bereich des Füllstandmessgeräts entweder aus einem Sendeimpuls des hochfrequenten Messsignals oder aus einem der Störechosignale gebildet wird, wobei aus den Nutzechosignalen, dem Referenzechosignal und den Störechosignalen eine von der Laufzeit oder der Laufstrecke abhängige aktuelle Echokurve gebildet wird, wobei zumindest aus einem ersten Störechosignal und dem Referenzechosignal, die in einem messinaktiven Bereich des Füllstandmessgeräts verursacht werden, ein Bezugspunkt in der aktuellen Echokurve lokalisiert wird, wobei aus der Distanz des in einem messaktiven Bereich des Füllstandmessgeräts ausgebildeten Nutzechosignals zu dem Bezugspunkt in der aktuellen Echokurve der Füllstand ermittelt wird.

Bei einer bevorzugten Ausgestaltung des erfindungsgemäßen Verfahrens wird anhand des Referenzechosignals mit einer ersten hohen Amplitude eine Grobbestimmung des Bezugspunkts durchgeführt.

Eine andere bevorzugte Ausführungsform des erfindungsgemäßen Verfahrens führt anhand des ersten Störechosignals mit einer zweiten geringeren Amplitude eine Feinbestimmung des Bezugspunktes durch.

Bei einer weiteren bevorzugten Ausgestaltung des erfindungsgemäßen Verfahrens verwendet zur Lokalisierung des Bezugspunkts die aktuelle Echokurve, die verschoben wird, indem das erste Störechosignal der aktuellen Echokurve auf eine vorgegebenen Initialposition des ersten Störechosignals verschoben wird.

Bei einer weiteren bevorzugte Ausführungsform des erfindungsgemäßen Verfahrens wird davon ausgegangen, dass kontinuierlich Position und Amplitude des ersten Störechosignals und/oder des Bezugspunktes als Daten abgespeichert werden.

Weitere bevorzugte Ausführungsformen des Verfahrens nach der Erfindung sehen vor, dass aus den Daten der zeitliche Verlauf und Änderungen in der Amplitude des ersten Störechosignals oder des Bezugspunktes ermittelt und dargestellt werden.

Eine ergänzende Ausführungsform des erfindungsgemäßen Verfahrens erlaubt, dass die verschobene Echokurve zyklisch, ergeignisgesteuert oder manuell als Historienechokurve abgespeichert wird.

Bei einer weiterführenden bevorzugten Ausführungsform des erfindungsgemäßen Verfahrens wird die verschobene Echokurve gemeinsam mit der abgespeicherten Historienechokurve dargestellt wird.

Weitere bevorzugte Ausführungsform des erfindungsgemäßen Verfahrens berücksichtigen, dass anhand der Bestimmung der Distanz und/oder des Kurvenverlaufs des Referenzechosignals und des ersten Störechosignals in der aktuellen Echokurve und/oder verschobenen Echokurve eine Funktionsdiagnose des Füllstandmessgeräts durchgeführt wird.

In einer anderen bevorzugten Ausführungsform des erfindungsgemäßen Verfahrens wird in einem messaktiven Bereich des Füllstandmessgeräts zumindest ein drittes Störechosignal in der aktuellen Echokurve und/oder verschobenen Echokurve bestimmt.

Eine Ausgestaltung des erfindungsgemäßen Verfahrens sieht dazu vor, dass anhand der Distanz und/oder anhand des Kurvenverlaufs zwischen dem dritten Störechosignal und dem Bezugspunkt eine Kalibrierung der Ausbreitungsgeschwindigkeit der hochfrequenten Messsignale in der Gasphase oberhalb des Füllstands des Mediums vorgenommen wird.

Bei einer weiteren Ausführungsform der Erfindung wird anhand der kalibrierten Ausbreitungsgeschwindigkeit der hochfrequenten Messsignale in der Gasphase der ermittelte Füllstand korrigiert.

Eine andere bevorzugte Ausführungsform der Erfindung beschäftigt sich mit dem Fall, dass die Störechosignale, das Referenzechosignal und/oder die Nutzechosignale anhand von zumindest einem Suchschritt in zumindest einem vorgegebenen Suchfenster der aktuellen Echokurve ermittelt werden.

In einer weiteren bevorzugten Ausführungsform des erfindungsgemäßen Verfahrens werden in einem ersten Suchschritt im ersten Suchfenster der aktuellen Echokurve das große Referenzechosignal, in einem zweiten Suchischritt im zweiten Suchfenster der aktuellen Echokurve das erste Störechosignal, in einem dritten Suchschritt im dritten Suchfenster der aktuellen Echokurve das dritte Störechosignal und/oder einem vierten Suchschritt im vierten Suchfenster der aktuellen Echokurve das Nutzechosignal ermittelt. Der Vorteil der vorgegebenen Bereiche der Initialpositionen der Echos liegt darin, dass man die verschiedenen Echos eindeutig zuordnen kann, unabhängig von deren Amplitude und Vorzeichen.

Eine bevorzugte Ausgestaltung des Verfahrens sieht insbesondere vor, dass die Ermittlung der Störechosignale, des Referenzechosignale und/oder der Nutzechosignale die Suchschritte in den vorgegebenen Suchfenstern der aktuellen Echokurve gleichzeitig erfolgen.

In einer vorteilhaften Ausführungsform des erfindungsgemäßen Verfahrens wird vorgeschlagen, dass die Suchfenster in einer vorgegebenen Breite und in einer vorgegebenen, symmetrischen oder asymmetrischen Anordnung um eine vorgegebene Initialposition erzeugt werden.

Eine vorteilhafte Ausführungsform des erfindungsgemäßen Verfahrens ist darin zu sehen, dass die Lokalisierung der Bezugposition, die Kalibrierung der Ausbreitungsgeschwindigkeit und/oder die Funktionsdiagnose des Füllstandmessgeräts vom Bediener manuell gestartet wird.

Eine alternative vorteilhafte Ausgestaltung des erfindungsgemäßen Verfahrens sieht vor, dass die Lokalisierung der Bezugposition, die Kalibrierung der Ausbreitungsgeschwindigkeit und/oder die Funktionsdiagnose des Füllstandmessgeräts automatisch in vorgegebenen Zyklen oder ereignisgesteuert gestartet wird.

Die Erfindung wird nachfolgend unter Hinweis auf bevorzugte Ausführungsbeispiele und die beigefügten Zeichnungen näher beschrieben und erläutert. Dabei zeigen:
Fig. 1: ein Ausführungsbeispiel eines Füllstandsmessgeräts, welches nach dem Prinzip der Zeitbereichsreflektometrie hochfrequente Messsignale über eine Messsonde aussendet und empfängt,
Fig. 2: einen vergrößerten Ausschnitt des in Fig. 1 gezeigten Füllstandmessgeräts mit Messsonde und Messumformer,
Fig. 3: eine schematische Darstellung einer aktuellen Echokurve und einer optimalen Echokurve eines Füllstandsmessgeräts bei zwei unterschiedlichen Messbedingungen, und
Fig. 4: eine schematische Darstellung einer aktuellen Echokurve und der um einen Laufzeitunterschied verschobenen Echokurve bei der gleichen Messbedingung.

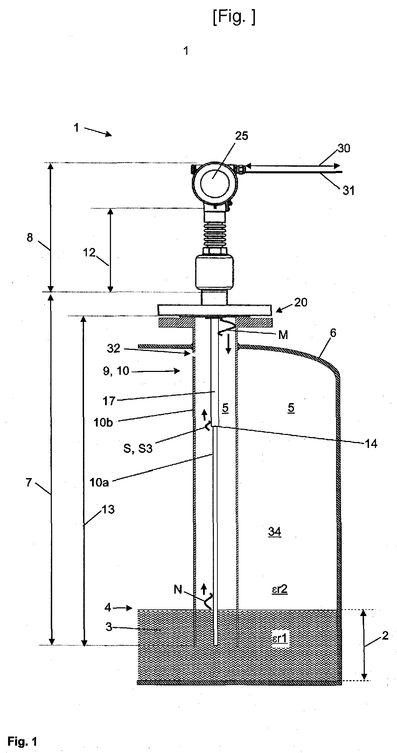

In Fig. 1 ist ein Füllstandsmessgeräts 1 als Zeitbereichreflektometer bzw. TDR-Messsytem zur Ermittlung des kontinuierlichen Füllstandes 2 eines Mediums 3 im Prozessraum 34 eines Behälters 6 dargestellt. Das Füllstandsmessgeräte 1 setzt sich aus einem messaktiven Bereich 7, der prozessberührend mit dem Medium 3 bzw. der diesem überlagerten Gasphase des Prozessraums 34 in Berührung kommt, und einem messinaktiven Bereich 8, aus einem vom Prozessraum 34 getrennten Sondeneinkoppelbereich 12 und einem vom Prozessraum 34 getrennten Messumformer 25, zusammen. Dieses Füllstandsmessgeräts 1 ist beispielsweise über einen Flansch 20 und/oder ein Prozessgewinde 19 an dem Behälter 6 angebracht. Über einen als Koaxialsystem ausgebildeten Sondeneinkoppelbereich 12 wird das in der HF-Einheit 26 des Messumformer 25 erzeugte hochfrequente Messsignal HF in die im Prozessraum 34 eines Behälters 6 befindliche Messsonde 9 ein- und ausgekoppelt. Der Wellenleiter 9 ist in dieser Darstellung als Koaxialsonde 10, bestehend aus einem Außenleiter 10b und einem Innenleiter 10a, aufgebaut. Es sind jedoch auch weitere Ausführungsformen von Wellenleitern 9, wie z.B. ein Sommerfeld-Wellenleiter (Eindrahtwellenleiter), ein Goubau-Wellenleiter (Eindraht Wellenleiter mit dielektrischer Beschichtung), eine Lecher-Leitung (Zweidraht-Wellenleiter), ein Mikrostreifenwellenleiter oder ein Hohlleiter mit beliebigen, rechteckigen oder runden Querschnitten in diesem Verfahren verwendbar.

Der Innenleiter 10a der Messsonde 9 in Fig. 1 weist ausgehend vom Sondeneinkoppelbereich 12 eine Messsondenverdickung 17 auf. In diese Messsondenverdickung 17 ist z.B. eine Messsondenverschraubung 16 eingearbeitet, so dass eine entsprechende Messsonde 9 bzw. ein entsprechender Wellenleiter 9 in der Form eines Stabes oder eines Seiles der vorgesehenen Länge angeschraubt werden kann.

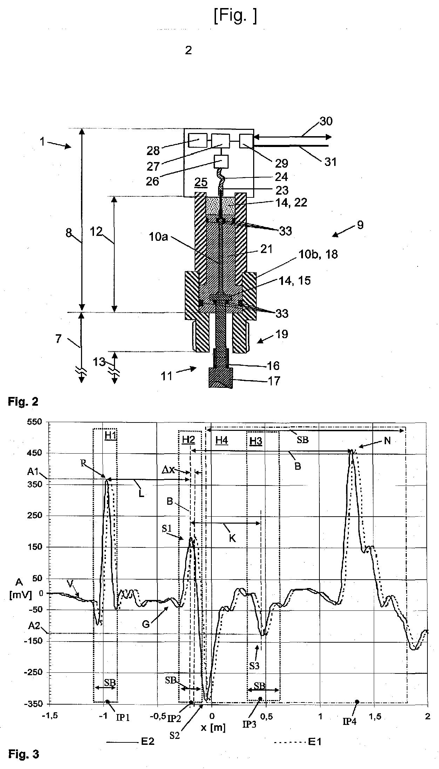

Ein vergrößerter Ausschnitt des Wellenleiters 9 und des Messumformers 25 des in Fig. 1 abgebildeten Füllstandmessgeräts 1 ist in Fig. 2 vergrößert dargestellt.

Die TDR-Messmethode arbeitet nach folgenden Messprinzip: Über die Messsonde 9 werden hochfrequente Messsignale HF als Sendeimpuls M in Richtung des Mediums 3 bzw. in den Prozessraum 34 ausgesendet. Dieser Sendeimpuls M wird entweder aufgrund einem DK-Wert-Sprung bzw. einer Diskontinuität der Dielektrizitätskonstante er des die Messsonde 9 umgebenden Stoffes als Nutzechosignal N oder aufgrund einer Änderung der Geometrie des Wellenleiters 9 teilweise als Störechosignal S zurückreflektiert. Eine Diskontinuität des Wellenwiderstandes liegt beispielsweise an der Grenzschicht 4 des Mediums 3 vor, wenn die Dielektrizitätskonstante er2 der dem Medium 3 überlagerten Gasphase 5, insbesondere bei Luft er2»1, kleiner ist als die Dielektrizitätskonstante er1 des Mediums 3. Mit Hilfe der gemessenen Laufzeit t und der Kenntnis der Ausbreitungsgeschwindigkeit der hochfrequente Messsignale HF wird durch eine Umrechnungsformel die zurückgelegte einfache Laufstrecke x ermittelt. Der Füllstand 2 des Mediums 3 im Behälter 6 entspricht der Höhe des Behälters 6 bzw. dem Ort der Einkopplung der hochfrequente Messsignale HF in den Wellenleiter 9 minus die zurückgelegte einfachen Laufstrecke x der hochfrequente Messsignale HF. Da die Höhe des Behälters 6 bekannt ist, lässt sich somit der Füllstand 2 im Behälter 6 bestimmen.

Die hochfrequenten Messsignale HF bzw. die elektromagnetischen Wellen breiten sich nahezu mit Lichtgeschwindigkeit aus, deshalb ergeben sich sehr kurze Laufzeiten t. Bei einer Auflösung der Messung des Füllstands 2 von einem Millimeter sind Unterschiede in der Laufzeit t von ungefähr 10 Pikosekunden zu ermitteln. Die Messung dieser kurzen Zeiten ist nur unter Einsatz spezieller Elektronikkomponenten und hohem Messaufwand möglich. Deshalb wird meist mittels einer sequentiellen Abtastung das reflektierte Echokurvensignal E, das zumindest das Nutzechosignal N und die Störechosignale S beinhaltet, in einen niederfrequenteren Bereich als ein Zwischenfrequenzsignal transformiert. Dieses Zwischenfrequenzsignal wird beispielsweise durch das Mischerprinzip aus einem Sendeimpulssignal und einem dazu leicht phasenverschobenen Abtastimpulssignal erzeugt. Nach einer nachfolgenden Digitalisierung des in ein Zwischenfrequenzsignal transformierten Echokurvensignals E wird diese in einem Mikroprozessor in der Regel-/Auswerteeinheit 27 weiterverarbeitet, gefiltert und ausgewertet.

Die elektromagnetischen Wellen werden beispielsweise als Sendeimpulse M mit einer Bandbreite von 0 - 1,5 GHz in der HF-Einheit 26 im Messumformer 25 erzeugt und mittels eines Sondeneinkoppelbereichs 12 an der Messsonde 9 beispielsweise in die Koaxialsonde 10 eingekoppelt. Die aufgrund der Diskontinuität der Dielektrizitätskonstanten er des umgebenden Stoffes zurücklaufenden Nutzechosignale N oder Störechosignale S werden wiederum in der HF-Einheit 26 empfangen und vorzugsweise wie zuvor beschrieben als zeitgedehntes Zwischenfrequenzsignal aufbereitet. Diese aufbereiteten hochfrequenten Messsignale HF werden darüber hinaus in der Regel-/Auswerteeinheit 27 messtechnisch und signaltechnisch ausgewertet, indem diese beispielsweise gefiltert, zeittransformiert und geglättet werden. Der so erhaltenen Messwert des Füllstands 2 oder die die gesamte Messsituation abbildende Echokurve E, die die aufbereitete Einhüllende aus der Überlagerung des Sendeimpulses M, der Störechosignale S und dem Nutzechosignal N darstellt, werden beispielsweise über eine Busschnittstelle 29 auf den Feldbus 30 an beispielsweise eine Leitstelle und/oder weitere Feldgeräte weitergeleitet. Der Messwert des Füllstands 2 oder die Echokurve E können jedoch auch an einem integrierten Display oder einer Ausgabe-/Eingabeeinheit 28 des Füllstandsmessgeräts 1 dargestellt werden.

Die Energieversorgung des Füllstandmessgeräts 1 wird beispielsweise mittels einer Zweidraht-Leitung realisiert. Die zusätzliche Versorgungsleitung 31 zur Energieversorgung entfällt, wenn es sich bei dem Füllstandmessgerät 1 um ein so genanntes Zweileiter-Messgerät handelt, dessen Kommunikation über den Feldbus 30 und Versorgungsleitung 31 ausschließlich und gleichzeitig über eine Zweidrahtleitung erfolgt. Die Datenübertragung bzw. Kommunikation über den Feldbus 30 wird beispielsweise nach dem CAN-, HART-, PROFIBUS DP-, PROFIBUS FMS-, PROFIBUS PA-, oder FOUNDATION FIELDBUS- Standard umgesetzt.

Entscheidend für die vielseitige Einsetzbarkeit eines Zeitbereichsreflektometer als Füllstandsmessgerät 1 ist dessen Unempfindlichkeit gegenüber anwendungsbedingten Einflüssen. Dies wird am Besten durch eine Einstabsonde 11 erreicht, der im Vergleich zu den anderen möglichen Sensorgeometrien, wie insbesondere bei einer Zweistab- und einer Koaxialsonde 10, eine viel größere räumliche Ausdehnung des Messsignals aufweist. Aus diesem Grund ergeben sich in den meisten Fällen bei Produktablagerungen am Sensor weder Störechosignale S, noch wird die Amplitude A des Sendesignals M erheblich gedämpft oder die Laufzeit t vergrößert. Ein weiterer Vorteil der Einstabsonde 11 ist, dass selbst bei großen Sensorlängen von mehreren Metern keine Abstandshalter im messaktiven Bereich 7 benötigt werden, an denen sich Material ablagern kann, bzw. die durch Vibration, Temperaturstress oder Korrosion beschädigt werden können.

Fig. 2 zeigt eine axiale Querschnitt-Darstellung eines Teilausschnitts des in Fig. 1 dargestellten TDR- Füllstandsmessgeräts 1. Die Messsonde 9 besteht im Sondeneinkoppelbereich 12 aus einem drucktragenden, temperaturbeständigen Sondeneinkopplungsgehäuse 18. Dieses Sondeneinkopplungsgehäuse 18 erstreckt sich über den gesamten Sondeneinkoppelbereich 12 bis zu einer koaxialen Glasdurchführung 22, an der die Signaleinspeisung des hochfrequenten Messsignals HF über eine flexible Koaxialleitung 24 über einen Koaxialstecker 23 von der HF-Einheit 26 erfolgt. Unterhalb der Glasdurchführung 22 werden erfahrungsgemäß hochbeständige und je nach späteren Prozessanforderungen der Messsonde 9 auch temperaturbeständige Füllmaterialien 21 eingesetzt. Als temperaturbeständige Füllmaterialien 21 kommen beispielsweise Keramiken, wie z.B. Aluminiumoxid-Keramik, in Frage, die gegenüber dem Glas der Glasdurchführung 22 nicht nur den Vorteil der höheren mechanischen Festigkeit aufweisen, sondern wegen der wesentlich besseren Hydrolysebeständigkeit können Keramiken auch prozessberührend eingesetzt werden. Es können jedoch auch chemisch resistente Kunststoffe als Füllmaterial 21 für das Sondeneinkopplungsgehäuse 18 bei Messsonden 9, insbesondere im Niedertemperaturbereich, eingesetzt werden. Als Innenleiter 10a und/oder Außenleiter 10b wird ein Edelstahl oder beispielsweise Hastelloy ® aufgrund der besonderen Materialfestigkeit bevorzugt verwendet, der eine Biegefestigkeit von 20 bis 60 Nm an der Messsonde 9 bei einem Innenleiterdurchmesser von nur 10 mm aufweist. Zur Abdichtung des Zwischenraums zwischen dem Füllmaterial 21 und dem Innenleiter 10a oder dem Außenleiter 10b des Sondeneinkoppelgehäuses 18 werden primäre Dichtelemente 33 beispielsweise in der Form von Graphit-Stopfbuchspackungen, Elastomerdichtungen und/oder Stahl-Keramik-Verbindungen eingesetzt. Diese vorgelagerten Dichtelemente 33 dienen vor allem dem Schutz der gasdiffusionsdichten Glasdurchführung 22 und verhindern das Eindringen des Mediums 3 in den Zwischenraum zwischen dem Innenleiter 10a oder Außenleiter 10b und dem Füllmaterial 21 des Sondeneinkoppelbereichs 12. Das Eindringen von Medium in diesen Bereich hat zur Folge, dass die Messbedingungen aufgrund von Änderungen in der Ausbreitungscharakteristik und Ausbreitungsgeschwindigkeit der hochfrequenten Messsignale HF in diesem Bereich variieren und somit keine exakte Messung des Füllstandes 2 durchgeführt werden kann.

Die Materialwahl und die Ausgestaltung des Sondeneinkoppelbereichs 12 der Messsonde 9 sind so umgesetzt, dass der Wellenwiderstand bzw. die Impedanz des hochfrequenten Messsignals HF angepasst ist. Der Schaltungsaufbau der HF-Einheit 26 im Messumformer 25, sowie auch die Koaxialleitung 24 sind auf eine Impedanz von ungefähr 50 Ohm abgestimmt. Die Impedanz einer Einstabsonde 11 liegt deutlich über diesem Wert, beispielsweise ergibt sich bei einer Einstabsonde 11 mit einem Radius von ungefähr 10 mm, einem Wandabstand zum Behälter 6 von hundert Millimeter und bei einer Einkopplung in Luft eine Impedanz von annähernd 200 Ohm. Mit den bekannten Relationen für den Reflexionsfaktor und den Transmissionsfaktor erhält man relativ schlechte Werte für das Anpassungsverhalten des Wellenwiderstands der hochfrequenten Messsignale HF im Bereich dieses Übergangs vom koaxial ausgebildeten Sondeneinkoppelbereich 12 auf den Messsondenbereich 13. Bei einer Einstabsonde 11 ergibt sich somit meist ein großes zweites Störechosignal S2 am Übergang zwischen dem koaxialen Sondeneinkoppelbereich 12 und dem Messsondenbereich 13 der Einstabsonde 9, das so genannte "Fiducial"-Echosignal Dieses zweite Störechosignal S2 ist von den Einbaubedingungen und Ansatz abhängig und wird bei großem Füllstand zudem vom Nutzechosignal N überlagert, wodurch dieses zweite Störechosignal S2 bei einer exakten Messung des Füllstands 2 als Bezugspunkt B nur bedingt verwendbar ist.

Grundsätzlich strebt man die Ausbildung einer impedanzangepassten Messsonde 9 an, so dass der Sondeneinkoppelbereich 12 und die Zuführung des hochfrequenten Messsignals HF über die Koaxialleitung 24 auf eine Impedanz von ca. 50 Ohm ausgelegt ist und sich dadurch keine Vielfachreflexionen und Störechosignale S ergeben. Ist im Sondeneinkoppelbereich 12 der Messsonde 9 der Durchmesser des Innenleiters 10a auf 10 mm ausgelegt, so ergibt sich für den Außenleiters 10b aufgrund des dazwischen befindlichen Füllmaterial 21 im Falle von Aluminiumoxid-Keramik mit einer großen Dielektrizitätskonstanten er = 10 einen Durchmesser von ungefähr 150 mm. Bei diesem großen Durchmesser wären jedoch im koaxial ausgebildeten Sondeneinkoppelbereich 12 innerhalb des Füllmaterials 21 neben dem TEM-Grundmode bereits höhere Moden ausbreitungsfähig. Dadurch bildet sich im Sondeneinkoppelbereich 21 ein koaxialer Resonator aus. Es wird deshalb ein kleinerer Außenleiterdurchmesser gewählt, der zwar eine geringere Impedanz als 50 Ohm ergibt. Dieser nicht angepasste Bereich wird jedoch bewusst in seiner axialen Ausdehnung sehr klein gewählt, wodurch sich kein nennenswertes Klingeln im Abklingverhalten ergibt. Das Klingeln in der Echokurve E würde sich darin zeigen, dass die Echosignale in der Echokurve E nicht schnell abklingen, sondern nur langsam an Amplitude A verlieren. Die Klingelflanke des Sendeimpulses M kann das Nutzechosignal N im messaktiven Bereich 7 überdecken, so dass gar kein verwendbares Nutzechosignal N im Nahbereich des Übergangs vom Sondeneinkoppelbereich 12 auf den Messsondenbereich 13 der Messsonde 9 ermittelbar ist.

Wird eine Koaxialsonde 10 als Messsonde 9 verwendet, so wird beispielsweise auf das Prozessgewinde 19 ein rohrförmiges Gebilde als Außenleiter 10b mit dem Sondeneinkoppelbereich 19 der Messsonde 9 verschraubt. Oder der Außenleiter 10b ist fest im Behälter 6 als ein Rohr eingebaut, wie in der Fig. 1 angedeutet, so dass der Innenleiter 10a der Messsonde 9 über eine Öffnung im Rohr in den Prozessraum 34 geführt wird und der Prozessraum 34 mit dem Flansch 20 an der Messsonde 9 dicht verschlossen wird. Am Außenleiter 10b der Koaxialsonde 10 befindet sich eine Belüftungsöffnung 32, damit bei ansteigendem Medium 3 im Behälter 6 das sich im Zwischenraum der Koaxialsonde 10 befindliche Gas in den Prozessraum 34 entweichen kann. Die Anpassung der Impedanz der Messsonde 9 als Koaxialsonde 10 gestaltet sich anders als bei der Einstabsonde 11. Der Impedanzsprung beim Übergang vom Sondeneinkoppelbereich 12 auf den Messsondenbereich 13 fällt in diesem Fall geringer aus, wodurch in diesem Fall ein kleineres zweites Störechosignal S2 an dieser Stelle zu erwarten ist.

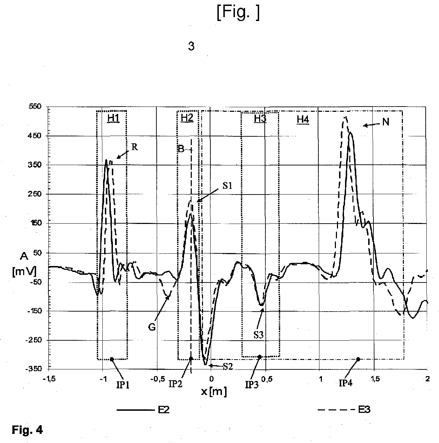

In Fig. 3 und Fig. 4 sind die aktuellen, verschobenen und optimalen Echokurven E1, E2, E3 des hochfrequenten Messsignals HF proportional zur Laufstrecke x in Meter dargestellt. Diese Echokurven spiegeln verschiedene Messsituation des in Fig. 1 abgebildeten Füllstandmessgeräts 1 wieder. Auf der Abszissenachse ist der Laufweg x des hochfrequenten Messsignals HF aufgetragen, und die Ordinatenachse enthält die Amplitude A des hochfrequenten Messsignals HF in Millivolt.

In Fig. 3 sind die aktuelle Echokurve E1 als kurz gestrichelte Line und die erfindungsgemäß um einen Laufwegunterschied Dx verschobene Echokurve E2 dargestellt. Die verschobene Echokurve E2 ist nach dem erfindungsgemäßen Verfahren verschoben worden, um die aktuelle Echokurve E1 auf Änderungen in den Messbedingungen oder Geräteeigenschaften anzupassen und zu kalibrieren. In Fig. 3 ist eine Messsituation abgebildet, bei der aufgrund einer Leckage in den Dichtelementen 33 beispielsweise Wasser als Wasserdampf bis zur Glasdurchführung 22 in den Zwischenraum zwischen Innenleiter 10a und Füllmaterial 21 eingedrungen ist, wodurch sich aufgrund der dadurch verringerten Ausbreitungsgeschwindigkeit der hochfrequenten Messsignale HF die Laufzeit t vergrößert hat. Dadurch ist ausgehend von einem gemeinsamen Bezugspunkt B das Referenzechosignal R der verschobenen Echokurve E2 im Gegensatz zum Referenzechosignal R der aktuellen Echokurve E1 nach links verschoben. Das ist ebenfalls in Fig. 4 zu erkennen, wo die verschobene Echokurve E2 mit der optimalen, vor Inbetriebnahme der Messung aufgezeichneten Echokurve E3 verglichen wird. Ebenfalls in Fig. 4 zu erkennen ist, dass das dritte Störechosignal S3 und das Nutzechosignal N der verschobenen Echokurve E2 ausgehend vom gemeinsamen Bezugspunkt B gegenüber der optimalen Echokurve E3 nach rechts verschoben sind. Dieser weitere Effekt wird hervorgerufen durch die niedrigere Ausbreitungsgeschwindigkeit des hochfrequenten Messsignals HF aufgrund die höhere Dielektrizitätskonstante er des Wasserdampfes in der Gasphase 5 im Prozessraum 34 des Behälters 6.

Das folgende erfindungsgemäße Ermittlungsverfahren ist nicht nur auf die aktuelle, optimale oder verschoben Echokurve E1, E2, E3 beschränkt, sondern kann in allen Echokurve E angewendet werden. Deshalb wird im Folgenden nur noch der allgemein gültige Begriff der Echokurven E verwendet. Ausgehend von Initialpositionen IP1, IP2, IP3, IP4 wird in der Echokurve E wird in den Grenzen der Suchfenster H mit einer vorgegebenen Suchbreite SB nach dem Sendesignal M, dem Nutzechosignal N, dem Referenzechosignal R und weiteren Störechosignalen S gesucht. Die Initialpositionen IP, die Symmetrie der Suchfenster H und die Suchbreiten SB der Suchfenster H sind hierzu vom Anwender oder Hersteller als Erfahrungswerte fest vorgegeben worden oder es werden abgespeicherte Parameter der Initialpositionen IP und der Suchbreiten SB von vorhergehenden Messzyklen verwendet. Die Suchfenster H können asymmetrisch um die Initialpositionen IP angeordnet sein, beispielsweise beim dritten Störechosignal S3, dessen Abstand sich in Hinsicht auf den Bezugspunkt B nur vergrößern kann.

Im ersten Suchfenster H1 wird zur Grobbestimmung des Bezugspunktes B ein Referenzechosignal R ermittelt. Als Referenzechosignal R wird beispielsweise der in der HF-Einheit 26 erzeugte Sendeimpuls M des hochfrequenten Messsignals HF verwendet. Der die Verwendung des Sendeimpulses M als Referenzechosignal R hat den Vorteil, dass dessen Zeitpunkt der Erzeugung recht genau bestimmt werden kann, da dieser eine erste hohe Amplitude A1 und ein sehr schmale Impulsbreit aufweist. In einem ersten Suchschritt wird abhängig von der vorgegeben Initialposition IP1 des Referenzechosignals R und der Suchbreite SB der Scheitelpunkt des Referenzechosignals R und dessen Position in der Echokurve E bestimmt. Eine Plausibilisierung kann zusätzlich über Vorzeichen und/oder die Amplitude A durchgeführt werden. Zur exakten Bestimmung des Nutzechosignals N, des Referenzechosignals R und/oder der Störechosignale S kann beispielsweise auch eine Parabel an die Echokurve E gefittet werden, der Scheitel dieser Parabel bestimmt dann Ort und Amplitude dieser Echosignale.

Ausgehend von diesem Referenzechosignal R wird aus einem vorgegebenen und von der jeweiligen Messsonde 9 abhängigen Abstand die Position des Bezugspunkts B in der Echokurve E grob bestimmt. Darauf folgend wird in einem zweiten Suchfenster H2 ausgehend von einer Initialposition IP2, die vorgegeben ist oder anhand des Referenzechosignal R bestimmt wurde, ein erstes Störechosignal S1 ermittelt. Dieses erste Störechosignal S1 wird durch ein Störelement 14 aufgrund der geometrischen Änderung des Innenleiters 10a der Messsonde 9 in der Form eines Anpasselements 15 hervorgerufen. Diese Anpasselement 15 ist so ausgestaltet, dass ein erstes Störechosignal S1 mit einer zweiten geringen Amplitude A2 erzeugt wird und somit eine Beeinflussung der Messung aufgrund von Mehrfachreflexionen in der Echokurve E reduziert wird. Anhand der Bestimmung des ersten Störechosignals S1 wird eine Feinbestimmung des Bezugspunkts B vorgenommen. Bei der Feinbestimmung wird die Position des aus dem vorgegebenen Abstand zum Referenzechosignal R grob ermittelten Bezugspunkts B exakt bestimmt und entsprechend korrigiert. Das Anpasselement 15 ist im messinaktiven Bereich 8 der Messsonde 9 ausgebildet, damit das erste Störechosignal S1 nicht durch das Medium 3, die Gasphase 5, oder den Einbau im Behälter 6 beeinflusst werden kann. Gleichzeitig ist das Anpasselement 15 so weit in Richtung messaktivem Bereich 7 angeordnet, dass das erste Störechosignal S1 praktisch nicht von Laufzeitänderungen im messinaktiven Bereich 8 beeinflusst werden kann. Beispielsweise werden solche Laufzeitänderungen im Sondeneinkoppelbereich 12 durch eingedrungenes Medium verursacht oder im Bereich der Koaxialleitung 24 durch Temperaturänderungen.

Das zweite Störechosignal S2, das durch eine Störstelle 14 am Übergang zwischen dem messinaktivem Bereich 8 und dem messaktivem Bereich 7 der Messsonde 9 entsteht, ist zu Diagnose- und Kalibrierungszwecken weniger geeignet als das erste Störechosignal S1, da es von den Einbaubedingungen und/oder dem zu messenden Medium 3 beeinflusst wird. Beispielsweise wird das zweite Störechosignal S2 durch den Einbau im Stutzen oder am Flansch 20 kleiner und zeitlich verschoben. Steigt der Füllstand bei großem DK-Wert er bis zum Übergang zwischen dem messinaktivem Bereich 8 und dem messaktivem Bereich 7 der Messsonde 9 an, wird das zweite Störechosignals S2 ferner vom Nutzechosignal N vollständig überdeckt und nicht mehr ermittelt werden kann. Deshalb können solche Füllstandsmessgeräte 1 nur bis zu einer maximalen vorbestimmten Höhe den Füllstand 2 bestimmen, da innerhalb dieser so genannten Blockdistanz der Füllstand 2 aufgrund von Mehrfachreflexionen und Überdeckung durch das Nutzechosignal N nicht genau ermittelt werden kann. Aus den obigen Gründen findet dieses zweite Störechosignal S2 im erfindungsgemäßen Verfahren keine weitere Beachtung und/oder Verwendung zur Ermittlung des Bezugspunktes B. Zur Bestimmung von Ansatz von Medium 3 in diesem Übergangsbereich mittels einer sich ändernden Amplitude A ist das zweite Störechosignal S2 in diesem Ermittlungsverfahren verwendbar.

In einem dritten Suchfenster H3 wird ausgehend von der vorgegebenen oder kalkulierten Initialposition IP3 ein drittes Störechosignal S3 bestimmt, das an einer Störstelle 14 im messaktiven Bereich 7 der Messsonde 9 entsteht, wie z.B. an einem Querschnittssprung durch eine Messsondenverdickung 17 der Messsonde 9. Diese Messsondenverdickung 17 ist so ausgelegt, dass der Wellenwiderstand am Ende der Messsondenverdickung 17 wiederum nur geringfügig verringert wird und somit nur ein drittes Störechosignal mit einer kleinen, negativen Amplitude A entsteht, das die Messung aufgrund von auftretenden Mehrfachreflexionen allenfalls nur unwesentlich beeinflusst. Anhand der ermittelten Strecke K zwischen dem ermittelten Bezugspunkt B und dem dritten Störechosignal S3 kann einen Kalibrierung der Ausbreitungsgeschwindigkeit der hochfrequenten Messsignale HF auf der Messsonde 9 innerhalb der Gasphase 5 vorgenommen werden, da die Abmessungen der Messsonde 9 und die Abstände zwischen den Störstellen 14 vorgeben oder bekannt sind.

In einem vierten Suchbereich S4 wird ausgehend von einer vorgegebenen oder ermittelten Initialposition IP4 das Nutzechosignal N in der Echokurve E ermittelt. Aus der Distanz D zwischen dem Bezugspunkt B und dem Nutzechosignal N und der Höhe des Behälters 6 lässt sich wie zuvor beschrieben der Füllstand 2 des Mediums 3 kalkulieren. Das dargestellte Nutzechosignal N ist beispielsweise von Wasser als Medium 3 erzeugt worden.

Zur Verdeutlichung der auftretenden Veränderungen der Echosignale in den Echokurven E aufgrund sich ändernder Messbedingungen oder Gerätedefekte sind zwei Echokurven E2, E3 mit unterschiedlichen Messbedingungen in Fig. 4 dargestellt. Die optimale Echokurve E3, in Fig. 4 als gestrichelte Linie gezeigt, wurde bei Raumtemperatur und Normaldruck im Prozessraum 34 des Behälters 6 aufgenommen. Entgegengesetzt dazu wurde die verschobene Echokurve E2, in Fig. 4 als durchgezogene Linie gezeichnet ist, zu einem späteren Zeitpunkt bei Prozessbedingungen mit Temperaturen bei ungefähr 200 Grad Celsius und mit einem Druck von ungefähr 16 bar aufgenommen. Die verschobene Echokurve E2 ist nach dem erfindungsgemäßen Verfahren verschoben worden, um die Echokurve E an die Änderungen in den Messbedingungen, z.B. aufgrund von in den Sondeneinkoppelbereich 12 eingedrungenem Medium 3, anzupassen. Durch die Ermittlung eines identischen Bezugspunktes B in jeder Echokurve E wird somit eine gemeinsame exakte Basis für die verschiedenen Messsituationen bewirkt und somit die Verfügbarkeit des Füllstandsmessgerät 1 entscheidend erhöht. Mit Hilfe der exakten Bestimmung des Bezugspunktes B der bei verschieden Messsituationen bestimmten Echokurven E kann ein Abgleich der unterschiedlichen Echokurve E, z.B. durch einfaches Verschieben der Echokurve E bis zur Deckung der Bezugspunkte B vorgenommen werden.

Aus den ermittelten Distanzen D und Amplitudenwerte A der Echos in den Echokurven E können verschieden Aussagen über die Messbedingungen und den Gerätezustand hergeleitet werden. Beispielsweise können anhand der Entfernung L, Kurvenverläufe V und/oder der Amplitude A des Referenzechosignals R und des ersten Störechosignals S1 im messinaktiven Bereich 8 des Messsonde 9 Rückschlüsse auf die Funktionsfähigkeit der Messsonde 9 und der Elektronik im Messumformer 25 geschlossen werden, da diese Parameter nicht durch den Prozess beeinflusst werden. Aus dem Vergleich der beiden Amplituden A oder Kurvenverläufe V der Störechosignale G der Glasdurchführung 22 in der optimalen Echokurve E3 und der verschobenen Echokurve E2 können zur Diagnose beispielsweise solche Rückschlüsse auf die Funktionsfähigkeit der Messsonde 9 und Elektronik im Messumformer 25 gemacht werden. Durch das in den Zwischenraum zwischen Füllmaterial 21 und Innenleiter 10a eingedrungene Medium 3 wird die Amplitude A des Störechosignals G der Glasdurchführung 22 stark gedämpft, wodurch diese Messsituation somit leicht detektiert werden kann. In der Darstellung der verschobenen Echokurve 2 ist eine Streckung der Echokurve E aufgrund von eingedrungenem Medium dargestellt. Das kann entweder durch eine Verschiebung bzw. Kalibrierung der Echokurven E auf den Bezugspunkt B kompensiert werden oder für eine Fehlermeldung genutzt werden. Aufgrund einer reduzierten Amplitude A oder geänderten Kurvenverlaufs V des Referenzechosignals R und/oder des ersten Störechosignals S1 könnte man beispielsweise darauf schließen, dass die Empfindlichkeit des Füllstandmessgeräts 1, beispielsweise durch Alterungserscheinungen der Elektronik im Messumformer 25 abgenommen hat.

Die Echokurven E können durch eine in der Elektronik des Messumformers 25 Speicherfunktion als Historienechokurven HE in einem Speicher im Messumformer 25 abgespeichert werden. Dadurch ist es möglich, Veränderungen in den Betriebseigenschaften der Messsonde 9 und der Elektronik im Messumformer 25 oder den Messbedingungen im Prozess durch einen direkten Vergleich der Abstände, Distanz D, Strecken K, des Kurvenverlaufs V und/oder der Amplituden A des Referenzechosignals R, des Nutzechosignals N und/oder der Störechosignale S einer zu einem beliebigen Zeitpunkt abgespeicherten Historienechokurve HE mit der aktuellen Echokurve E1 vorzunehmen. Des Weiteren können aus den Unterschieden des Signal-Rausch-Verhältnisses der abgespeicherten Historienechokurve HE zu dem Signal-Rausch-Verhältnis der aktuellen Echokurve E1 Informationen über die in Funktionsfähigkeit und Alterungserscheinungen der Messsonde 9 und der Elektronik im Messumformer 25 gewonnen werden.

Eine weitere Aussage über die Messbedingungen im Prozessraum 34 lässt sich aus der Distanz x zwischen dem Bezugspunkt B oder dem ersten Störechosignal S1 im messinaktiven Bereich 8 der Messsonde 9 und dem dritten Störechosignal S3 im messaktiven Bereich 7 der Messsonde 9 herleiten. Beispielsweise kann aus der den Änderungen der relativen Amplitude A oder Kurvenverlauf V des ersten Störechosignal S1 und/oder des dritten Störechosignal S3 eine Diagnose oder Verifizierung der Messung des Füllstandsmessgeräts 1 durchgeführt werden. Im vorliegenden Fall ist das eine geänderte Ausbreitungsgeschwindigkeit durch Wasserdampf in der Gasphase 5. Andererseits könnte es aber auch Ansatz sein oder die Montage der Messsonde 9 entlang einer Außenwand eines Kunststoffbehälters. In diesem Fall wird eine Kalibrierung durchgeführt, indem die Distanz D, einzelne Echosignalabstände, Strecken K und Amplituden A in der Echokurve E im messaktiven Bereich 8 skaliert werden und/oder eine Fehlermeldung ausgegeben wird, falls ein vorgegebener Schwellwert der Distanz D, einzelnen Echosignalabstände, Strecken K und/oder der Amplitude A unterschritten wird. Eine reduzierte Amplitude A des dritten Störechosignals S3 könnte beispielsweise bedeuten, dass sich durch einen Prozesseinfluss, z.B. in Form von Ansatz im Stutzen, die Empfindlichkeit des Füllstandmessgeräts 1 schlechter hat.

Die Kalibrierung oder Diagnose der Echokurven E kann automatisch oder manuell erfolgen, letzteres beispielsweise im Rahmen einer wiederkehrenden Prüfung des Füllstandmessgeräts 1.

### Bezugszeichenliste

**Tabelle 1**

| | |
|---|---|
| 1 | Füllstandsmessgerät |
| 2 | Füllstand |
| 3 | Medium |
| 4 | Grenzschicht |
| 5 | Gasphase |
| 6 | Behälter |
| 7 | messaktiver Bereich |
| 8 | messinaktiver Bereich |
| 9 | Wellenleiter, Messsonde |
| 10 | Koaxialsonde |
| 10a | Innenleiter |
| 10b | Außenleiter |
| 11 | Einstabsonde |
| 12 | Sondeneinkoppelbereich |
| 13 | Messsondenbereich |
| 14 | Störstellen |
| 15 | Anpasselement |
| 16 | Messsondenverschraubung |
| 17 | Messsondenverdickung |
| 18 | Sondeneinkoppelgehäuse |
| 19 | Prozessgewinde |
| 20 | Flansch |
| 21 | Füllmaterial |
| 22 | Glasdurchführung |
| 23 | Koaxialstecker |
| 24 | Koaxialleitung |
| 25 | Messumformer |
| 26 | HF-Einheit |
| 27 | Regel-/Auswerteeinheit |
| 28 | Ein-/Ausgabeeinheit |
| 29 | Busschnittstelle |
| 30 | Feldbus |
| 31 | Versorgungsleitung |
| 32 | Belüftungsöffnung |
| 33 | Dichtelemente |
| 34 | Prozessraum |
| | |
| E | Echokurve, Echokurvensignal |
| E1 | aktuelle Echokurve |
| E2 | verschobene Echokurve |
| E3 | optimale Echokurve |
| HE | Historienechokurve |
| HF | hochfrequente Messsignale |
| M | Sendeimpuls, Sendesignal |
| N | Nutzechosignale |
| S | Störechosignale |
| S1 | Erstes Störechosignale |
| S2 | zweites Störechosignale |
| S3 | drittes Störechosignale |
| G | Störechosignal der Glasdurchführung |
| B | Bezugspunkt, Bezugsposition |
| R | Referenzechosignale |
| N | Nutzechosignale |
| IP | Initialposition |
| IP1 | Initialposition des Referenzechosignals |
| IP2 | Initialposition des ersten Störechosignals |
| IP3 | Initialposition des zweiten Störechosignals |
| IP4 | Initialposition des dritten Störechosignals |
| P | Position |
| D | Distanz |
| K | Strecke |
| L | Entfernung |
| A | Amplitude |
| A1 | erste Amplitude |
| A2 | zweite Amplitude |
| V | Kurvenverlauf |
| SB | Sudibreite |
| H | Suchfenster |
| H1 | erstes Suchfenster |
| H2 | zweites Suchfenster |
| H3 | drittes Suchfenster |
| H4 | viertes Suchfenster |
| x | Laufstrecke, Laufweg |
| Dx | Laufwegunterschied, |
| t | Laufzeit |
| Dt | Laufzeitunterschied |
| er | Dielektrizitätskonstante, DK-wert |
| er1 | Dielektrizitätskonstante der Gasphase |
| er2 | Dielektrizitätskonstante des Mediums |

## Patentansprüche

1. Verfahren zur Ermittlung und Überwachung des Füllstands (2) eines Mediums (3) in einem Behälter (9) mit einem Füllstandsmessgerät (1), bei dem nach der Methode der Zeitbereichsreflektometrie hochfrequenter Messsignale (HF) über zumindest eine Messsonde (5) in Richtung des Mediums (3) geführt werden und an zumindest einer Grenzschicht (4) des Mediums (3) als Nutzechosignale (N) oder an Störstellen (14) als Störechosignale (S) reflektiert und empfangen werden, wobei ein Referenzechosignal (R) in einem messinaktiven Bereich (12) des Füllstandmessgeräts (1) entweder aus einem Sendeimpuls (M) des hochfrequenten Messsignals (HF) oder aus einem der Störechosignale (S) gebildet wird, wobei aus den Nutzechosignalen (N), dem Referenzechosignal (R) und den Störechosignalen (S) eine von der Laufzeit (t) oder der Laufstrecke (x) abhängige aktuelle Echokurve (E1) gebildet wird, wobei zumindest aus einem ersten Störechosignal (S1) und dem Referenzechosignal (R), die in einem messinaktiven Bereich (12) des Füllstandmessgeräts (1) verursacht werden, ein Bezugspunkt (B) in der aktuellen Echokurve (E1) lokalisiert wird, wobei aus der Distanz (D) des in einem messaktiven Bereich (11) des Füllstandmessgeräts (1) ausgebildeten Nutzechosignals (N) zu dem Bezugspunkt (B) in der aktuellen Echokurve (E1) der Füllstand (2) ermittelt wird.

2. Verfahren nach Anspruch 1, wobei anhand des Referenzechosignals (R) mit einer ersten hohen Amplitude (A1) eine Grobbestimmung des Bezugspunkts (B) durchgeführt wird.

3. Verfahren nach Anspruch 1, wobei anhand des ersten Störechosignals (S1) mit einer zweiten geringen Amplitude (A2) eine Feinbestimmung des Bezugspunktes (B) durchgeführt wird.

4. Verfahren nach Anspruch 1, 2 oder 3, wobei zur Lokalisierung des Bezugspunkts (B) die aktuelle Echokurve (E1) verschoben wird, indem das erste Störechosignal (S1) der aktuellen Echokurve (E1) auf eine vorgegebene Initialposition (IP1) des ersten Störechosignals (S1) verschoben wird.

5. Verfahren nach Anspruch 4, wobei kontinuierlich Position (P) und Amplitude (A) des ersten Störechosignals (S1) und/oder des Bezugspunktes (B) als Daten abgespeichert werden.

6. Verfahren nach Anspruch 4, wobei aus den Daten der zeitliche Verlauf und Änderungen in der Amplitude (A) des ersten Störechosignals (S1) oder des Bezugspunktes (B) ermittelt und dargestellt werden.

7. Verfahren nach Anspruch 4, wobei die verschobene Echokurve (E2) zyklisch, ergeignisgesteuert oder manuell als Historienechokurve (HE) abgespeichert wird.

8. Verfahren nach Anspruch 7, wobei die verschobene Echokurve (E2) gemeinsam mit der abgespeicherten Historienechokurve (HE) dargestellt wird.

9. Verfahren nach Anspruch 1, 2, 3 oder 4, wobei anhand der Bestimmung der Distanz (D) und/oder des Kurvenverlaufs (K) des Referenzechosignals (R) und des ersten Störechosignals (S1) in der aktuellen Echokurve (E1) und/oder verschobenen Echokurve (E2) eine Funktionsdiagnose des Füllstandmessgeräts (1) durchgeführt wird.

10. Verfahren nach Anspruch 1 oder 4, wobei in einem messaktiven Bereich (11) des Füllstandmessgeräts (1) zumindest ein drittes Störechosignal (S3) in der aktuellen Echokurve (E1) und/oder verschobenen Echokurve (E2) bestimmt wird.

11. Verfahren nach Anspruch 10, wobei anhand der Distanz (D) und/oder anhand des Kurvenverlaufs (K) zwischen dem dritten Störechosignal (S3) und dem Bezugspunkt (B) eine Kalibrierung der Ausbreitungsgeschwindigkeit der hochfrequenten Messsignale (HF) in der Gasphase (8) oberhalb des Füllstands (2) des Mediums (3) vorgenommen wird.

12. Verfahren nach Anspruch 11, wobei anhand der kalibrierten Ausbreitungsgeschwindigkeit der hochfrequenten Messsignale (HF) in der Gasphase (8) der ermittelte Füllstand (2) korrigiert wird.

13. Verfahren nach Anspruch 1 bis 6 oder 9-12, wobei die Störechosignale (S), das Referenzechosignal (R) und/oder die Nutzechosignale (N) anhand von zumindest einem Suchschritt (K) in zumindest einem vorgegebenen Suchfenster (H) der aktuellen Echokurve (E1) ermittelt werden.

14. Verfahren nach Anspruch 13, wobei in einem ersten Suchschritt (K1) im ersten Suchfenster (H1) der aktuellen Echokurve (E1) das große Referenzechosignal (R), in einem zweiten Suchschritt (K2) im zweiten Suchfenster (H2) der aktuellen Echokurve (E1) das erste Störechosignal (S1), in einem dritten Suchschritt (K3) im dritten Suchfenster (H3) der aktuellen Echokurve (E1) das dritte Störechosignal (S3) und/oder einem vierten Suchschritt (K4) im vierten Suchfenster (H4) der aktuellen Echokurve (E1) das Nutzechosignal (N) ermittelt wird.

15. Verfahren nach Anspruch 13 bis 14, wobei die Ermittlung der Störechosignale (S), des Referenzechosignale (R) und/oder der Nutzechosignale (N) die Suchschritte (K) in den vorgegebenen Suchfenstern (H) der aktuellen Echokurve (E1) gleichzeitig erfolgen.

16. Verfahren nach Anspruch 13 bis 15, wobei die Suchfenster (H1, H2, H3, H4) in einer vorgegebenen Suchbreite (SB) und in einer vorgegebenen, symmetrischen oder asymmetrischen Anordnung um eine vorgegebene Initialposition (IP1, IP2, IP3, IP4) erzeug werden.

17. Verfahren nach Anspruch 4, 9 oder 11, wobei die Lokalisierung der Bezugsposition (B), die Kalibrierung der Ausbreitungsgeschwindigkeit und/oder die Funktionsdiagnose des Füllstandmessgeräts (1) vom Bediener manuell gestartet wird.

18. Verfahren nach Anspruch 4, 9 oder 11, wobei die Lokalisierung der Bezugposition (B), die Kalibrierung der Ausbreitungsgeschwindigkeit und/oder die Funktionsdiagnose des Füllstandmessgeräts (1) automatisch in vorgegebenen Zyklen oder ereignisgesteuert gestartet wird.

## Claims

1. Procedure for determining and monitoring the level (2) of a medium (3) in a vessel (9) using a level transmitter (1), wherein according to the time-domain reflectometry method high-frequency (HF) measuring signals are directed in the direction of the medium (3) via at least one measuring probe (5) and are reflected and received at at least one interface (4) of the medium (3) as useful echo signals (N) or as interference echo signals (S) at interference points (14), wherein a reference echo signal (R) is formed in an inactive measurement zone (12) of the level transmitter (1) either from a transmission pulse (M) of the high-frequency (HF) measuring signal or from one of the interference echo signals (S), wherein a current echo curve (E1), which is dependent on the transit time (t) or the path (x), is formed from the useful echo signals (N), the reference echo signal (R) and the interference echo signals (S), wherein a reference point (B) is localized in the current echo curve (E1) out of at least a first interference echo signal (S1) and the reference echo signal (R) that are caused in an inactive measurement zone (12) of the level transmitter (1), wherein the level (2) is determined from the distance (D) between the useful echo signal (N) formed in an active measurement zone (11) of the level transmitter (1) and the reference point (B) in the current echo curve (E1).

2. Procedure as claimed in Claim 1, wherein an approximate determination of the reference point (B) is performed using the reference echo signal (R) with a first high amplitude (A1).

3. Procedure as claimed in Claim 1, wherein a precise determination of the reference point (B) is performed using the first interference echo signal (S1) with a second low amplitude (A2).

4. Procedure as claimed in Claim 1, 2 or 3, wherein the current echo curve (E1) is shifted in order to localize the reference point (B) by shifting the first interference echo signal (S1) of the current echo curve (E1) to a prespecified initial position (IP1).

5. Procedure as claimed in Claim 4, wherein the position (P) and the amplitude (A) of the first interference echo signal (S1) and/or of the reference point (B) are continuously saved as data.

6. Procedure as claimed in Claim 4, wherein the pattern over time and changes in the amplitude (A) of the first interference echo signal (S1) or the reference point (B) are determined and presented on the basis of the data.

7. Procedure as claimed in Claim 4, wherein the shifted echo curve (E2) is saved as a history echo curve (HE) cyclically by event-control or manually.

8. Procedure as claimed in Claim 7, wherein the shifted echo curve (E2) is displayed together with the saved history echo curve (HE).

9. Procedure as claimed in Claim 1, 2, 3 or 4, wherein function diagnostics is performed for the level transmitter (1) using the determination of the distance (D) and/or the curve pattern (K) of the reference echo signal (R) and the first interference echo signal (S1) in the current curve (E1) and/or in the shifted curve (E2).

10. Procedure as claimed in Claim 1 or 4, wherein at least a third interference echo signal (S3) is determined in the current echo curve (E1) and/or shifted echo curve (E2) in an active measurement zone (11) of the level transmitter (1).

11. Procedure as claimed in Claim 10, wherein a calibration of the propagation speed of the high-frequency (HF) measuring signals is performed in the gas phase (8) above the level (2) of the medium (3) on the basis of the distance (D) and/or the curve pattern (K) between the third interference echo signal (S3) and the reference point (B).

12. Procedure as claimed in Claim 11, wherein the determined level (2) is corrected on the basis of the calibrated propagation speed of the high-frequency (HF) measuring signals in the gas phase (8).

13. Procedure as claimed in Claim 1 to 6 or 9 to 12, wherein the interference echo signals (S), the reference echo signal (R) and/or the useful echo signals (N) are determined on the basis of at least one search step (K) in at least one predefined search window (H) of the current echo curve (E1).

14. Procedure as claimed in Claim 13, wherein the large reference echo signal (R) is determined in a first search step (K1) in the first search window (H1) of the current echo curve (E1), the first interference echo signal (S1) is determined in a second search step (K2) in the second search window (H2) of the current echo curve (E1), the third interference echo signal (S3) is determined in a third search step (K3) in the third search window (H3) of the current echo curve (E1) and/or the useful echo signal (N) is determined in a fourth search step (K4) in the fourth search window (H4) of the current echo curve (E1).

15. Procedure as claimed in Claim 13 to 14, wherein the search steps (K) are performed simultaneously in the predefined search windows (H) of the current echo curve (E1) with a view to determining the interference echo signals (S), the reference echo signals (R) and/or the useful echo signals (N).

16. Procedure as claimed in Claim 13 to 15, wherein the search windows (H1, H2, H3, H4) are generated in a predefined search size (SB) and in a predefined symmetrical or asymmetrical arrangement around a predefined initial position (IP1, IP2, IP3, IP4).

17. Procedure as claimed in Claim 4, 9 or 11, wherein the localization of the reference position (B), the calibration of the propagation speed and/or the function diagnostics of the level transmitter (1) are started manually by the operator.

18. Procedure as claimed in Claim 4, 9 or 11, wherein the localization of the reference position (B), the calibration of the propagation speed and/or the function diagnostics of the level transmitter (1) are started automatically in predefined cycles or are event-controlled.

## Revendications

1. Procédé destiné à la détermination et la surveillance du niveau (2) d'un produit (3) dans un réservoir (9) à l'aide d'un transmetteur de niveau (1), pour lequel sont acheminés des signaux de mesure haute fréquence (HF) d'après la méthode de la réflectométrie temporelle par l'intermédiaire d'au moins une sonde de mesure (5) en direction du produit (3) et sont réfléchis et reçus sur au moins une interface (4) du produit (3) en tant que signaux d'écho utiles (N) ou sur des irrégularités en tant que signaux d'écho parasites (S), pour lequel un signal d'écho de référence (R) est formé dans une zone de mesure inactive (12) du transmetteur de niveau (1), soit à partir d'une impulsion d'émission (M) du signal de mesure haute fréquence (HF), soit à partir de l'un des signaux d'écho parasites (S), pour lequel une courbe d'écho actuelle (E1) fonction du temps de propagation (t) ou de la distance de propagation (x) est formée à partir des signaux d'écho utiles (N), du signal d'écho de référence (R) et des signaux d'écho parasites (S), pour lequel un point de référence (B) est localisé dans la courbe d'écho actuelle (E1) au moins à partir d'un premier signal d'écho parasite (S1) et du signal d'écho de référence (R), qui sont occasionnés dans une zone de mesure inactive (12) du transmetteur de niveau (1), pour lequel le niveau (2) est déterminé par rapport au point de référence (B) situé dans la courbe d'écho actuelle (E1) à partir de la distance (D) du signal d'écho utile (N) formé dans une zone de mesure active (11) du transmetteur de mesure (1).

2. Procédé selon la revendication 1, pour lequel est réalisée au moyen du signal d'écho de référence (R), avec une première amplitude élevée (A1), une détermination approximative du point de référence (B).

3. Procédé selon la revendication 1, pour lequel est réalisée au moyen du premier signal d'écho parasite (S1), avec une deuxième amplitude faible (A2), une détermination précise du point de référence (B).

4. Procédé selon la revendication 1, 2 ou 3, pour lequel la courbe d'écho actuelle (E1) est déplacée pour la localisation du point de référence (B) en ce que le premier signal d'écho parasite (S1) de la courbe d'écho actuelle (E1) est déplacé à une position initiale (IP1) prédéfinie du premier signal d'écho parasite (S1).

5. Procédé selon la revendication 4, pour lequel la position (P) et l'amplitude (A) du premier signal d'écho parasite (S1) et/ou du point de référence (B) sont enregistrées continuellement en tant que données.

6. Procédé selon la revendication 4, pour lequel le déroulement temporel et les changements d'amplitude (A) du premier signal parasite (S1) ou du point de référence (B) sont déterminés et représentés à partir des données.

7. Procédé selon la revendication 4, pour lequel la courbe d'écho déplacée (E2) est enregistrée de façon cyclique, commandée par événement ou manuellement en tant que courbe d'écho historique (HE).

8. Procédé selon la revendication 7, pour lequel la courbe d'écho déplacée (E2) est représentée conjointement avec la courbe d'écho historique (HE) enregistrée.

9. Procédé selon la revendication 1, 2, 3 ou 4, pour lequel un diagnostic de fonctionnement du transmetteur de niveau (1) est exécuté au moyen de la détermination de la distance (D) et/ou de l'allure de la courbe (K) du signal d'écho de référence (R) et du premier signal d'écho parasite (S1) dans la courbe d'écho actuelle (E1) et/ou dans la courbe d'écho déplacée (E2).

10. Procédé selon la revendication 1 ou 4, pour lequel au moins un troisième signal d'écho parasite (S3) est déterminé dans une zone de mesure active (11) du transmetteur de niveau (1) dans la courbe d'écho actuelle (E1) et/ou dans la courbe d'écho déplacée (E2).

11. Procédé selon la revendication 10, pour lequel un étalonnage de la vitesse de propagation des signaux de mesure haute fréquence (HF) est effectué dans la phase gazeuse (8) au-dessus du niveau (2) du produit (3) sur la base de l'allure de la courbe (K) entre le troisième signal d'écho parasite (S3) et le point de référence (B).

12. Procédé selon la revendication 11, pour lequel le niveau (2) déterminé est corrigé sur la base de la vitesse de propagation étalonnée des signaux de mesure haute fréquence (HF) dans la phase gazeuse (8).

13. Procédé selon la revendication 1 à 6 ou 9 à 12, pour lequel les signaux d'écho parasites (S), le signal d'écho de référence (R) et/ou les signaux d'écho utiles (N) sont déterminés sur la base d'au moins une étape de recherche (K) dans au moins une fenêtre de recherche (H) prédéfinie dans la courbe d'écho actuelle (E1).

14. Procédé selon la revendication 13, pour lequel le grand signal d'écho de référence est déterminé dans une première étape de recherche (K1) dans la première fenêtre de recherche (H1) de la courbe d'écho actuelle (E1), le premier signal d'écho de référence (S1) dans une deuxième étape de recherche (K2) dans la deuxième fenêtre de recherche (H2) de la courbe d'écho actuelle (E1), le troisième signal d'écho de référence (S3) dans une troisième étape de recherche (K3) dans la troisième fenêtre de recherche (H3) de la courbe d'écho actuelle (E1) et/ou le signal d'écho parasite (N) dans une quatrième étape de recherche (K4) dans la quatrième fenêtre de recherche (H4) de la courbe d'écho actuelle (E1).

15. Procédé selon la revendication 13 à 14, pour lequel les étapes de recherche (K) sont exécutées simultanément dans les fenêtres de recherche (H) prédéfinies de la courbe d'écho actuelle (E1) en vue de la détermination des signaux d'écho parasites (S), des signaux d'écho de référence (R) et/ou des signaux d'écho utiles (N).

16. Procédé selon la revendication 13 à 15, pour lequel les fenêtres de recherche (H1, H2, H3, H4) d'une largeur de recherche (SB) prédéfinie et dans une disposition symétrique ou asymétrique prédéfinie, sont générées autour d'une position initiale (IP1, IP2, IP3, IP4).

17. Procédé selon la revendication 4, 9 ou 11, pour lequel la localisation de la position de référence (B), l'étalonnage de la vitesse de propagation et/ou le diagnostic de fonctionnement du transmetteur de niveau (1) sont démarrés manuellement par l'opérateur.

18. Procédé selon la revendication 4, 9 ou 11, pour lequel la localisation de la position de référence (B), l'étalonnage de la vitesse de propagation et/ou le diagnostic de fonctionnement du transmetteur de niveau (1) sont démarrés automatiquement selon des cycles prédéfinis ou de façon commandée par événement.
